# EUROPEAN PATENT APPLICATION

(11) **EP 2 143 338 A1**
(43) Date of publication of application: **13.01.2010**
(21) Application number: 09171217.4
(22) Date of filing: 27.09.2005
(51) Int. Cl.: A23K 1/00, A23K 1/165

(54) **Enzyme Granules**

(30) Priority: 27.09.2004 DK 200401465
(62) Divisional of application: 05785170.1
(71) Applicant: Novozymes A/S, 2880 Bagsvaerd (DK)
(72) Inventor: Marcussen, Erik Schmidt, 2750 Ballerup (DK); Borup, Flemming, 1620 Copenhagen V (DK); Simonsen, Ole, 2860 Soeborg (DK); Markussen, Erik Kjær, 3500 Vaerloese (DK)

(57) **Abstract**

The present application relates to a steam treated pelletized feed composition comprising a granule comprising a core and a coating wherein the core comprises an active compound and the coating comprises a salt.

## Description

### FIELD OF THE INVENTION

The present invention relates to steam treated pelletized feed compositions comprising salt coated granules. The invention further relates to the use of salt coated granules for steam-treated pelletized feed compositions.

### BACKGROUND OF THE INVENTION

In the art concerning animal feed it is a well known fact that pelleting of feed is a desideratum, as pelleting of feed increases the digestibility of especially the starch fraction of the feed. Furthermore, pelleting of feed reduces dust problems. It makes the feed easier to eat for the birds, and it makes it possible to incorporate small amounts of ingredients in the feed and to "lock" the feed mixture. In the process of producing feed pellets it is considered necessary to steam treat the feed pellets in order to kill Salmonella bacteria if present, whereby a steam treatment to around 80°C is appropriate. Active compounds present in the feed pellets such as enzymes are not stable at this high temperature, and thus, a large surplus of enzymes has to be used, or enzyme free feed components are pelletized and steam treated, where after an enzyme containing slurry or solution is coated on the steam treated pellets. However, this coating is cumbersome and is often not compatible with existing plants. An attempt to obtain improved enzyme granules for feed is found in WO 92/12645. WO 92/12645 describes T-granules, which are coated with a fat or a wax, and feed components which are steam treated and subsequently pelletized. By this invention it was possible to heat treat the granules comprising enzymes and avoid the cumbersome coating with enzymes after the heat treatment. The use of wax coated T-granules was a significant improvement in this field as it was possible to maintain an acceptable enzyme activity during steam pelleting. But the industry still demand improved enzyme activity after steam pelleting. Furthermore there is a demand for small enzyme granules that also comprise a significant amount of active enzyme after pelleting, for production of feed for broiler chickens. It makes it much easier to control the amount of enzyme in the feed pellets if small enzyme granules are used. Broiler chickens only eat few pellets per day and are believed to get a more homogenous enzyme intake if small enzyme granules are used in the manufacturing of the feed pellets. It is easier to solve this demand with the granules of the present invention compared with known enzyme granules on the market today.

The present invention solves said demands by coating an enzyme containing granule with a salt before steam pelleting. It has shown that it is possible to steam treat salt coated granules comprising an active compound and maintain a significant amount of activity.

The use of salt coatings in enzyme granulation is known from WO 00/01793 were it was found that salt coatings improve storage stability of enzyme granules for detergents.

### SUMMARY OF THE INVENTION

One object of the present invention is to provide steam treated pelletized feed compositions with a significant amount of activity. A second object of the present invention is to provide granules comprising an active compound which retain a significant amount of activity despite steam pelleting.

It has surprisingly been found that granules comprising active compounds like enzymes, when coated with a salt, are particularly good in the manufacture of steam treated pelletized feed as they retain a significant amount of activity despite the steam treatment. It has further shown that even with small granule sizes it has been possible to retain an acceptable amount of activity.

The present invention provides thus in a first aspect a steam treated pelletized feed composition comprising a granule comprising a core and a coating wherein the core comprises an active compound and the coating comprises a salt.

In a second aspect the present invention provides the use of a granule comprising a core comprising an active compound and a coating comprising a salt for steam treated pelletized feed compositions.

In a third aspect the present invention provides a granule comprising a core and a coating wherein the core comprises an active compound and the coating comprises a salt, and wherein the granule comprises at least 75% of active compound with retained activity after steam pelleting and wherein the granule further is characterized in one or more of the features selected from the group consisting of:
i. the particle size of the granule is below 400 µm,
ii. the thickness of the salt coating is at least 8 µm,
iii. the active compound is thermo labile,
iv. the granule further comprise a wax coating,
v. the granule further comprise a lactic acid source, and
vi. the active compound in the core of the granule is an enzyme.

### DETAILED DESCRIPTION OF THE INVENTION

### Definitions

### Solution:

A solution is defined as a homogeneous mixture of two or more substances.

### Suspension:

A suspension is defined as fine particles suspended in a fluid.

### Particle size:

By particle size of the granule is meant the mass mean diameter of the granules.

### %RH:

The term "% RH" is in the context of the invention to be understood as the relative humidity of air. 100% RH is air saturated with water moisture at a fixed temperature and % RH thus reflects the percent moisture saturation of the air.

### Constant humidity:

The term "constant humidity" (in the context of the invention sometimes abbreviated as CH) of a compound or substance is to be understood as the % RH of atmospheric air in equilibrium with a saturated aqueous solution of said compound in contact with the solid phase of said compound, all confined within a closed space at a given temperature. This definition is in accordance with *"*Handbook of chemistry and physics" CRC Press, Inc., Cleveland, USA, 58th edition, p E46, 1977-1978. Accordingly CH_{20°C} =50% for a compound means that air with a 50% humidity will be in equilibrium with a saturated aqueous solution of the compound at 20°C. Accordingly the term constant humidity is a measure of the hygroscopic properties of a compound.

### Introduction

We have surprisingly found it possible to increase the stability of an active compound comprised in granules during steam pelleting by applying a salt coating to the granules before the steam treatment. This means that we can improve the stability of active compounds comprised in feed compositions which get exposed to steam treatment during pelleting.

We have furthermore found it possible to prepare small granules comprising active compounds which retain acceptable activity levels despite steam treatment by coating with a salt.

Besides these surprising advantages the salt coating has shown to provide good dust values and increase the storage stability of feed granules compared to known wax coated granules. Furthermore a salt coating can act as a solubility regulator.

### The granule

When referring to the granule of the present invention it can either be a single granule or several granules.

The granule of the present invention which is particularly well suited for steam pelleting and as part of a steam treated pelletized feed composition, comprises a core and at least one coating. The core comprises an active compound and the coating comprises a salt.

The particle size of the granules to be used in feed pellets is normally more than 700 µm, more particular. 700-1000 µm. Suitable particle sizes of the granule of the present invention is found to be 50-2000 µm, more particular 100-1000 µm. We have found it possible to prepare particularly small feed granules for pelleting by coating the granules with a salt coating. The granule of the present invention may in a particular embodiment have a particle size below 700 µm. In another particular embodiment of the present invention the particle size of the finished granule is 100-600 µm. In a more particular embodiment of the present invention the particle size of the finished granule is 200-400 µm. In an even more particular embodiment of the present invention the particle size is 210-390 µm. In a most particular embodiment of the present invention the particle size of the finished granule is below 400 µm. In another most particular embodiment the particle size of the granules of the present invention is above 250 µm and below 350 µm.

In a particular embodiment of the present invention the particle size of the granule of the present invention is below 400 µm.

In a particular embodiment of the present invention the granules of the steam treated pelletized feed composition have a particle size below 400 µm.

In a particular embodiment of the present invention the granules to be used for steam treated pelletized feed compositions have a particle size below 400 µm.

In a particular embodiment of the present invention the particle size of the granule of the present invention is between 210 and 390 µm.

In a particular embodiment of the present invention the particle size of the granule of the steam treated pelletized feed composition is between 210 and 390 µm.

In a particular embodiment of the present invention the size of the granules to be used for steam treated pelletized feed compositions is between 210 and 390 µm.

### The Core

The core comprises an active compound in the form of concentrated dry matter.

The core can either be
1. a homogeneous blend of an active compound,
   or
2. an inert particle with an active compound applied onto it,
   or
3. a homogenous blend of an active compound and optionally materials which act as binders which is coated with an active compound.

The core particle of the present invention is in a particular embodiment 20-800 µm. In a more particular embodiment of the present invention the core particle size is 50-500 µm. In an even more particular embodiment of the present invention the core particle size is 100-300 µm. In a most particular embodiment of the present invention the core particle size is 150-250 µm.

### Inert particle:

The inert particle may be water soluble or water insoluble, e.g. starch, e.g. in the form of cassava or wheat; or a sugar (such as sucrose or lactose), or a salt (such as sodium chloride or sodium sulphate). Suitable inert particle materials of the present invention include inorganic salts, sugars, sugar alcohols, small organic molecules such as organic acids or salts, minerals such as clays or silicates or a combination of two or more of these.

Inert particles can be produced by a variety of granulation techniques including: crystallisation, precipitation, pan-coating, fluid bed coating, fluid bed agglomeration, rotary atomization, extrusion, prilling, spheronization, size reduction methods, drum granulation, and/or high shear granulation.

### Active compounds:

The active compound of the invention present in the core may be any active compound or mixture of active compounds, which benefits from being separated from the environment surrounding the granule. The term "active" is meant to encompass all compounds, which upon release from the granule upon applying the granule of the invention in a process, e.g. digestion, serve a purpose of improving the process. The active compound may be inorganic of nature or organic of nature. Particularly active compounds are active biological compounds which are usually very sensitive to the surrounding environment such as compounds obtainable from microorganisms. More particularly active compounds are peptides or polypeptides or proteins. Most particularly active compounds are proteins such as enzymes. Further suitable active compounds are growth promoters, antibiotics, antigenic determinants to be used as vaccines, polypeptides engineered to have an increased content of essential amino acids, hormones and other therapeutic proteins.

In a particular embodiment of the present invention the active compound in the core of the granule of the present invention is an enzyme.

In a particular embodiment of the present invention the active compound in the core of the granule of the steam treated pelletized feed composition is an enzyme.

In a particular embodiment of the present invention the active compound of the granules to be used for steam treated pelletized feed compositions is an enzyme.

The enzyme in the context of the present invention may be any enzyme or combination of different enzymes. Accordingly, when reference is made to "an enzyme" this will in general be understood to include one enzyme or a combination of enzymes.

It is to be understood that enzyme variants (produced, for example, by recombinant techniques) are included within the meaning of the term "enzyme". Examples of such enzyme variants are disclosed, e.g. in EP 251,446 (Genencor), WO 91/00345 (Novo Nordisk), EP 525,610 (Solvay) and WO 94/02618 (Gist-Brocades NV).

Enzymes can be classified on the basis of the handbook Enzyme Nomenclature from NC-IUBMB, 1992), see also the ENZYME site at the internet: http://www.expasy.ch/enzyme/. ENZYME is a repository of information relative to the nomenclature of enzymes. It is primarily based on the recommendations of the Nomenclature Committee of the International Union of Biochemistry and Molecular Biology (IUB-MB), Academic Press, Inc., 1992, and it describes each type of characterized enzyme for which an EC (Enzyme Commission) number has been provided (Bairoch A. The ENZYME database, 2000, Nucleic Acids Res 28:304-305). This IUB-MB Enzyme nomenclature is based on their substrate specificity and occasionally on their molecular mechanism; such a classification does not reflect the structural features of these enzymes.

Another classification of certain glycoside hydrolase enzymes, such as endoglucanase, xylanase, galactanase, mannanase, dextranase and alpha-galactosidase, in families based on amino acid sequence similarities has been proposed a few years ago. They currently fall into 90 different families: See the CAZy(ModO) internet site (Coutinho, P.M. & Henrissat, B. (1999) Carbohydrate-Active Enzymes server at URL:
http://afmb.cnrs-mrs.fr/∼cazy/CAZY/index.html (corresponding papers: Coutinho, P.M. & Henrissat, B. (1999) Carbohydrate-active enzymes: an integrated database approach. In "Recent Advances in Carbohydrate Bioengineering", H.J. Gilbert, G. Davies, B. Henrissat and B. Svensson eds., The Royal Society of Chemistry, Cambridge, pp. 3-12; Coutinho, P.M. & Henrissat, B. (1999) The modular structure of cellulases and other carbohydrate-active enzymes: an integrated database approach. In "Genetics, Biochemistry and Ecology of Cellulose Degradation"., K. Ohmiya, K. Hayashi, K. Sakka, Y. Kobayashi, S. Karita and T. Kimura eds., Uni Publishers Co., Tokyo, pp. 15-23).

The types of enzymes which may be incorporated in granules of the invention include oxidoreductases (EC 1.-.-.-), transferases (EC 2.-.-.-), hydrolases (EC 3.-.-.-), lyases (EC 4.-..-), isomerases (EC 5.-.-.-) and ligases (EC 6.-.-.-).

Preferred oxidoreductases in the context of the invention are peroxidases (EC 1.11.1), laccases (EC 1.10.3.2) and glucose oxidases (EC 1.1.3.4)]. An Example of a commercially available oxidoreductase (EC 1.-.-.-) is Gluzyme™ (enzyme available from Novozymes A/S).

Further oxidoreductases are available from other suppliers. Preferred transferases are transferases in any of the following sub-classes:
a Transferases transferring one-carbon groups (EC 2.1);
b transferases transferring aldehyde or ketone residues (EC 2.2); acyltransferases (EC 2.3);
c glycosyltransferases (EC 2.4);
d transferases transferring alkyl or aryl groups, other that methyl groups (EC 2.5); and
e transferases transferring nitrogeneous groups (EC 2.6).

A most preferred type of transferase in the context of the invention is a transglutaminase (protein-glutamine γ-glutamyltransferase; EC 2.3.2.13).

Further examples of suitable transglutaminases are described in WO 96/06931 (Novo Nordisk A/S).

Preferred hydrolases in the context of the invention are: carboxylic ester hydrolases (EC 3.1.1.-) such as lipases (EC 3.1.1.3); phytases (EC 3.1.3.-), e.g. 3-phytases (EC 3.1.3.8) and 6-phytases (EC 3.1.3.26); glycosidases (EC 3.2, which fall within a group denoted herein as "carbohydrases"), such as α-amylases (EC 3.2.1.1); peptidases (EC 3.4, also known as proteases); and other carbonyl hydrolases. Examples of commercially available phytases include Bio-Feed^{™} Phytase (Novozymes), Ronozyme^{™} P (DSM Nutritional Products), Natuphos^{™} (BASF), Finase^{™} (AB Enzymes), and the Phyzyme^{™} product series (Danisco). Other preferred phytases include those described in WO 98/28408, WO 00/43503, and WO 03/066847.

In the present context, the term "carbohydrase" is used to denote not only enzymes capable of breaking down carbohydrate chains (e.g. starches or cellulose) of especially five- and six-membered ring structures (i.e. glycosidases, EC 3.2), but also enzymes capable of isomerizing carbohydrates, e.g. six-membered ring structures such as D-glucose to five-membered ring structures such as D-fructose.

Carbohydrases of relevance include the following (EC numbers in parentheses):
α-amylases (EC 3.2.1.1), β-amylases (EC 3.2.1.2), glucan 1,4-α-glucosidases (EC 3.2.1.3), endo-1,4-beta-glucanase (cellulases, EC 3.2.1.4), endo-1,3(4)-β-glucanases (EC 3.2.1.6), endo-1,4-β-xylanases (EC 3.2.1.8), dextranases (EC 3.2.1.11), chitinases (EC 3.2.1.14), poly-galacturonases (EC 3.2.1.15), lysozymes (EC 3.2.1.17), β-glucosidases (EC 3.2.1.21), α-galactosidases (EC 3.2.1.22), β-galactosidases (EC 3.2.1.23), amylo-1,6-glucosidases (EC 3.2.1.33), xylan 1,4-β-xylosidases (EC 3.2.1.37), glucan endo-1,3-β-D-glucosidases (EC 3.2.1.39), α-dextrin endo-1,6-α-glucosidases (EC3.2.1.41), sucrose α-glucosidases (EC 3.2.1.48), glucan endo-1,3-α-glucosidases (EC 3.2.1.59), glucan 1,4-β-glucosidases (EC 3.2.1.74), glucan endo-1,6-β-glucosidases (EC 3.2.1.75), galactanases (EC 3.2.1.89), arabinan endo-1,5-α-L-arabinosidases (EC 3.2.1.99), lactases (EC 3.2.1.108), chitosanases (EC 3.2.1.132) and xylose isomerases (EC 5.3.1.5).

In the present context a phytase is an enzyme which catalyzes the hydrolysis of phytate (myo-inositol hexakisphosphate) to (1) myo-inositol and/or (2) mono-, di-, tri-, tetra- and/or penta-phosphates thereof and (3) inorganic phosphate.

According to the ENZYME site referred to above, different types of phytases are known: A so-called 3-phytase (myo-inositol hexaphosphate 3-phosphohydrolase, EC 3.1.3.8) and a so-called 6-phytase (myo-inositol hexaphosphate 6-phosphohydrolase, EC 3.1.3.26). For the purposes of the present invention, both types are included in the definition of phytase.

For the purposes of the present invention phytase activity may be, preferably is, determined in the unit of FYT, one FYT being the amount of enzyme that liberates 1 micro-mol inorganic ortho-phosphate per min. under the following conditions: pH 5.5; temperature 37°C; substrate: sodium phytate (C₆H₆O₂₄P₆Na₁₂) in a concentration of 0.0050 mol/l. Suitable phytase assays are described in Example 1 of WO 00/20569. FTU is for determining phytase activity in feed and premix. In the alternative, the same extraction principles as described in Example 1, e.g. for endoglucanase and xylanase measurements, can be used for determining phytase activity in feed and premix.

Examples of phytases are disclosed in WO 99/49022 (Phytase variants), WO 99/48380, WO 00/43503 (Consensus phytases), EP 0897010 (Modified phytases), EP 0897985 (Consensus phytases).

Phytases may also be obtained from, e.g., the following:
i. *Ascomycetes,* such as those disclosed in EP 684313 or US 6139902; *Aspergillus awamori* PHYA (SWISSPROT P34753, Gene 133:55-62 (1993)); *Aspergillus niger (ficuum)* PHYA (SWISSPROT P34752, Gene 127:87-94 (1993), EP 420358); *Aspergillus awamori* PHYB (SWISSPROT P34755, Gene 133:55-62 (1993)); *Aspergillus niger* PHYB (SWISSPROT P34754, Biochem. Biophys. Res. Commun. 195:53-57(1993)); *Emericella nidulans* PHYB (SWISSPROT O00093, Biochim. Biophys. Acta 1353:217-223 (1997));
ii. *Thermomyces* or *Humicola,* such as the *Thermomyces lanuginosus* phytase disclosed in WO 97/35017;
iii. *Basidiomycetes,* such as *Peniophora* (WO 98/28408 and WO 98/28409);
iv. Other fungal phytases such as those disclosed in JP 11000164 *(Penicillium* phytase), or WO98/13480 (*Monascus anka* phytase);
v. *Bacillus,* such as *Bacillus subtilis* PHYC (SWISSPROT 031097, Appl. Environ. Microbiol. 64:2079-2085 (1998)); *Bacillus sp.* PHYT (SWISSPROT 066037, FEMS Microbiol. Lett. 162:185-191 (1998); *Bacillus subtilis* PHYT_(SWISSPROT P42094, J. Bacteriol. 177:6263-6275 (1995)); the phytase disclosed in AU 724094, or WO 97/33976;
vi. *Escherichia coli* (US 6110719);
vii. *Schwanniomyces occidentalis* (US 5830732);
viii. a phytase having an amino acid sequence of at least 75% identity to a (mature) amino acid sequence of a phytase of (i)-(vii); or
ix. a phytase encoded by a nucleic acid sequence which hybridizes under low stringency conditions with a mature phytase encoding part of a gene corresponding to a phytase of (i)-(vii);
x. a variant of the phytase of (i)-(vii) comprising a substitution, deletion, and/or insertion of one or more amino acids;
xi. an allelic variant of (i)-(vii);
xii. a fragment of (i), (ii), (iii), (iv), (vi) or (vii) that has phytase activity; or
xiii. a synthetic polypeptide designed on the basis of (i)-(vii) and having phytase activity.

Other relevant phytases for use according to the invention are various variants of the *Peniophora lycii* phytase (mature peptide corresponding to amino acids 31-225 of SEQ ID NO: 15). These variants are disclosed in WO 2003 66847.

Examples of commercially available proteases (peptidases) include Kannase™, Everlase™, Esperase™, Alcalase™, Neutrase™, Durazym™, Savinase™, Ovozyme™, Pyrase™, Pancreatic Trypsin NOVO (PTN), Bio-Feed™ Pro and Clear-Lens™ Pro (all available from Novozymes A/S, Bagsvaerd, Denmark). Other preferred proteases include those described in WO 01/58275 and WO 01/58276.

Other commercially available proteases include Ronozyme™ Pro, Maxatase™, Maxacal™, Maxapem™, Opticlean™, Propease™, Purafect™ and Purafect Ox™ (available from Genencor International Inc., Gist-Brocades, BASF, or DSM Nutritional Products).

Examples of commercially available lipases include Lipex™, Lipoprime™, Lipopan™, Lipolase™, Lipolase™ Ultra, Lipozyme™, Palatase™, Resinase™, Novozym™ 435 and Lecitase™ (all available from Novozymes A/S).

Other commercially available lipases include Lumafast™ *(Pseudomonas mendocina* lipase from Genencor International Inc.); Lipomax™ (*Ps. pseudoalcaligenes* lipase from Gist-Brocades/Genencor Int. Inc.; and *Bacillus* sp. lipase from Solvay enzymes. Further lipases are available from other suppliers.

Examples of commercially available carbohydrases include Alpha-Gal™, Bio-Feed™ Alpha, Bio-Feed™ Beta, Bio-Feed™ Plus, Bio-Feed™ Wheat, Bio-Feed™ Z, Novozyme™ 188, Carezyme™, Celluclast™, Cellusoft™, Celluzyme™, Ceremyl™. Citrozym™, Denimax™, Dezyme™, Dextrozyme™, Duramyl™, Energex™, Finizym™, Fungamyl™, Gamanase™, Glucanex™, Lactozym™, Liquezyme™, Maltogenase™, Natalase™, Pentopan™, Pectinex™, Promozyme™, Pulpzyme™, Novamyl™, Termamyl™, AMG™ (Amyloglucosidase Novo), Maltogenase™, Sweetzyme™ and Aquazym™ (all available from Novozymes A/S). Further carbohydrases are available from other suppliers, such as the Roxazyme™ and Ronozyme™ product series (DSM Nutritional Products), the Avizyme™, Porzyme™ and Grindazyme™ product series (Danisco, Finnfeeds), and Natugrain™ (BASF) , Purastar™ and Purastar™ OxAm (Genencor).

Other commercially available enzymes include Mannaway™, Pectaway™, Stainzyme™ and Renozyme™.

In a particular embodiment of the present invention the enzyme is selected from the group consisting of endoglucanases, endo-1,3(4)-beta-glucanases, proteases, phytases, galactanases, mannanases, dextranases and alpha-galactosidase, and reference is made to WO 2003/062409 which is hereby incorporated by reference.

Particular suitable feed enzymes include: amylases, phosphotases, such as phytases, and/or acid phosphatases; carbohydrases, such as amylytic enzymes and/or plant cell wall degrading enzymes including cellulases such as β-glucanases and/or hemicellulases such as xylanases or galactanases; proteases or peptidases such as lysozyme; galatosidases, pectinases, esterases, lipases, in particular phospholipases such as the mammalian pancreatic phospholipases A2 and glucose oxidase. In particular the feed enzymes have a neutral and/or acidic pH optimum.

In a particular embodiment of the present invention the enzyme is selected from the group consisting of amylases, proteases, beta-glucanases, phytases, xylanases, phospholipases and glucose oxidases.

The present invention is particularly suited for thermo labile active compounds such as enzymes. The term thermo labile as applied in the context of certain active compounds refers to the melting temperature, Tₘ, as determined using Differential Scanning Calorimetry (DSC) at a pH of 5.5. For a thermo labile active compound, Tₘ is less than 100°C. In particular embodiments, the Tₘ is less than 90°C, such as less than 80°C, less than 70°C, even less than 60°C. The determination of Tₘ by DSC is performed at various PH-values using a VP-DSC from MicroCal. Scans are performed at a constant scan rate of 1.5 °C/min from 20-90°C. Before running the DSC, The phytases are desalted using NAP-5 columns (Pharmacia) equilibrated in the appropriate buffers (e.g. 0.2 M glycine-HCl, pH 2.5 or 3.0; 0.1 M sodium acetate, pH 5.5; 0.1M Tris-HCl, pH7.0). Data handling may be performed using the MicroCal Origin software.

The DSC measurements are performed as described in WO 2003/66847 which is hereby incorporated by reference.

In a particular embodiment of the present invention the active compound of the granules of the present invention is thermo labile.

In a particular embodiment of the present invention the active compound of the granules of the steam treated pelletized feed composition is thermo labile.

In a particular embodiment of the present invention the active compound of the granules to be used for steam treated pelletized feed compositions is thermo labile.

It has been found that by coating the granules of the present invention with a salt coating it is possible to keep more than 50% of activity of the active compound present in the core, more than 60%, such as more than 70%, and even more than 75% of activity after steam pelleting at 100°C at 60 seconds.

In a particular embodiment of the present invention the retained activity of the active compound present in the core of the granules in the steam treated pelletized feed composition is at least 75% of the activity of the active compound in the core of the granules before steam pelleting.

In a particular embodiment of the present invention the retained activity of the active compound present in the core of the granules to be used for steam treated pelletized feed compositions is at least 75% of the activity of the active compound in the core of the granules before steam pelleting.

In a particular embodiment of the present invention the activity of the active compound is at least 75% of the original activity of the active compound present in the core of the granules before steam treatment and pelletizing the composition.

In a particular embodiment of the present invention the granule comprises a core and a coating wherein the core comprises an active compound and the coating comprises a salt, and wherein the granule is capable of retaining at least 75% of the initial enzyme activity when incorporated in the process of steam pelleting and wherein the granule further comprise one or more of the following:
i. the particle size of the granule is below 400 µm,
ii. the thickness of the salt coating is at least 8 µm,
iii. the active compound is thermo labile,
iv. the granule further comprise a wax coating,
v. the granule further comprise a lactic acid source, and
vi. the active compound in the core of the granule is an enzyme.

### Phytase activity analysis:

Method: Phytase splits phytic acid into phosphate, released phosphate is reacted with vanadium and molydenium oxides into a colored (yellow) complex. Absorbance is measured at 415 nm.

Unit: 1 FTU = amount of enzyme which at standard conditions (as given below) releases phosphate equivalent to 1 µM phosphate per minute.

### Buffers:

Extraction buffer: 0.01 % Tween 20 (polyoxyethylene sorbitan monolaurate)
Substrate: 5 mM phytic acid, 0.22M acetate (sodium acetate/acetic acid), pH 5.5.

Reagent: 5 mM ammonium vanadate, 20 mM ammonium heptamolybdate tetrahydrate, 40 mM ammonia, 2.4M nitric acid

### Procedure:

Extraction of feed: 50 g feed is extracted in 500 ml extraction buffer for 1 hour. Eventual further dilution in extraction buffer if the activity is higher than 2.5 FTU/g feed. (Detection level is 0.1 FTU/g feed). The sample is centrifuged (15 minutes at 4000 rpm). 300 µl supernatant is mixed with 3 ml substrate and reacted for 60 minutes at 37 degree C. 2 ml reagent is added. Samples are centrifuged (10 minutes at 4000 rpm.). Absorbance at 415 nm is measured. Activity is determined relative to a standard curve prepared with KH₂PO₄.

Reference is made to WO 2003/66847.

### β-Glucanase activity analysis:

Method: β-Glucanase containing samples are incubated with a remazol stained β-glucan (barley) substrate and centrifuged. The converted substrate is soluble and colours the supernatant blue. Absorbance is measured at 590 nm.

Unit: The activity is measured relative to an β-glucanase enzyme standard (e.g. enzyme before pelleting).

### Buffers:

Extraction buffer: 33.3 mM Sorensen buffer pH 5.0.

### Sørensen buffer:

Disodium hydrogen phosphate dehydrate Na₂HPO₄×2H₂O 0.096 g
Potassium dehydrogenate phosphate H₂PO₄ 8.9864 g
Demineralised water up to 2000 mL
Buffer: 0.1 M Sørensen buffer, 45 g/l EDTA (Triplex III), 0.5 g/ml Albumin Bovine (BSA), pH 5.0
Substrate: Remazol stained β-glucan (barley) tablets from Megazyme
Stop reagent: 1% TRIS (Sigma 7-9)

### Procedure:

Extraction of feed: 50 g feed is extracted in 500 ml extraction buffer for 1 hour. If necessary further dilution in extraction buffer if a too high absorbance signal is obtained. The sample is centrifuged (5 minutes at 4000 rpm). 1 ml supernatant is mixed with 1 ml buffer and 1 tablet substrate and reacted for 90 minutes at 60°C. 5 ml stop reagent is added. Samples are filtered. Absorbance at 590 nm is measured. Activity is determined relative to a standard curve prepared with an enzyme standard.

### Xylanase activity analysis:

Method: Xylanase containing samples are incubated with a remazol wheat arabinoxylan substrate and centrifuged. The converted substrate is soluble and colours the supernatant blue. Absorbance is measured at 600 nm.

Unit: The activity is measured relative to an xylanase enzyme standard (e.g., enzyme before pelleting).

### Buffers:

Extraction buffer: 0.1M phosphate (Na₂HPO₄/NaH₂PO₄) pH 6.0
Substrate: 5 g/I AZCL-arabinoxylan (wheat) from Megazyme dissolved in extraction buffer
Stop reagent: 2% Trizma (Sigma T) (2-amino-2-(hydroxymethyl)-1,3-propanediol and
tris(hydroxymethyl)aminomethane hydrochlorid buffer)

### Procedure:

Extraction of feed: 50 g feed is extracted in 500 ml extraction buffer for 1 hour. If necessary further dilution in extraction buffer if a too high absorbance signal is obtained. The sample is centrifuged (5 minutes at 4000 rpm). 25 µl supernatant is mixed with 150 µl substrate and reacted for 60 minutes at 50°C. 100 µl stop reagent is added. Samples are filtered. Absorbance at 600 nm is measured. Activity is determined relative to a standard curve prepared with an enzyme standard.

The activity of other enzymes or active components is analyzed by standard methods known by the person skilled in the art.

In a particular embodiment of the present invention the feed composition of example 1 is used when determining the activity of the active compound. In a more particular embodiment of the present invention the feed composition of example 2 is used when determining the activity of the active compound.

### Materials suitable as binders:

Binders of the present invention can be synthetic polymers, waxes including fats, fermentation broth, carbohydrates, salts or polypeptides.

### Synthetic polymers

By synthetic polymers is meant polymers which backbone has been polymerised synthetically.

Suitable synthetic polymers of the invention includes in particular polyvinyl pyrrolidone (PVP), polyvinyl alcohol (PVA), polyvinyl acetate, polyacrylate, polymethacrylate, poly-acrylamide, polysulfonate, polycarboxylate, and copolymers thereof, in particular water soluble polymers or copolymers.

In a particular embodiment of the present invention the synthetic polymer is a vinyl polymer.

### Waxes

A "wax" in the context of the present invention is to be understood as a polymeric material having a melting point between 25 -150 °C, particularly 30 to100°C more particularly 35 to 85°C most particularly 40 to 75°C. The wax is preferably in a solid state at room temperature, 25°C. The lower limit is preferred to set a reasonable distance between the temperature at which the wax starts to melt to the temperature at which the granules or compositions comprising the granules are usually stored, 20 to 30°C.

For some granules a preferable feature of the wax is that the wax should be water soluble or water dispersible, the wax should disintegrate and/or dissolve providing a quick release and dissolution of the active incorporated in the particles to the aqueous solution. Examples of water soluble waxes are poly ethylene glycols (PEG's). Amongst water insoluble waxes, which are dispersible in an aqueous solution are triglycerides and oils. For some granules it is preferable that the wax is insoluble.

In a particular embodiment of the present invention the wax composition is a hydrophilic composition. In a particular embodiment at least 25 % w/w of the constituents comprised in the wax composition is soluble in water, preferably at least 50% w/w, preferably at least 75% w/w, preferably at least 85% w/w, preferably at least 95% w/w, preferably at least 99% w/w.

In another embodiment the wax composition is hydrophilic and dispersible in an aqueous solution.

In a particular embodiment the wax composition comprises less than 75% w/w hydrophobic constituents, preferably less than 50% w/w, preferably less than 25% w/w, preferably less than 15% w/w, preferably less than 5% w/w, preferably less than 1% w/w.

In a particular embodiment the wax composition comprise less than 75% w/w water insoluble constituents, preferably less than 50% w/w, preferably less than 25% w/w, preferably less than 15% w/w, preferably less than 5% w/w, preferably less than 1% w/w.

Suitable waxes are organic compounds or salts of organic compounds having one or more of the above mentioned properties.

The wax composition of the invention may comprise any wax, which is chemically synthesized. It may also equally well comprise waxes isolated from a natural source or a derivative thereof. Accordingly, the wax composition of the invention may comprise waxes selected from the following non limiting list of waxes.
- Poly ethylene glycols, PEG. Different PEG waxes are commercially available having different molecular sizes, wherein PEG's with low molecular sizes also have low melting points. Examples of suitable PEG's are PEG 1500, PEG 2000, PEG 3000, PEG 4000, PEG 6000, PEG 8000, PEG 9000 etc. e.g. from BASF (Pluriol E series) or from Clariant or from Ineos. Derivatives of Poly ethylene glycols may also be used.
- polypropylens (e.g. polypropylen glycol Pluriol P series from BASF) or polyethylens or mixtures thereof. Derivatives of polypropylenes and polyethylenes may also be used.
- Polymers of ethyleneoxide, propyleneoxide or copolymers thereof are useful, such as in block polymers, e.g. Pluronic PE 6800 from BASF. Derivatives of ethoxylated fatty alcohols.
- Waxes isolated from a natural source, such as Carnauba wax (melting point between 80-88°C), Candelilla wax (melting point between 68-70°C) and bees wax. Other natural waxes or derivatives thereof are waxes derived from animals or plants, e.g. of marine origin. Hydrogenated plant oil or animal tallow. Examples of such waxes are hydrogenated ox tallow, hydrogenated palm oil, hydrogenated cotton seeds and/or hydrogenated soy bean oil, wherein the term "hydrogenated" as used herein is to be construed as saturation of unsaturated carbohydrate chains, e.g. in triglycerides, wherein carbon=carbon double bonds are converted to carbon-carbon single bonds. Hydrogenated palm oil is commercially available e.g. from Hobum Oele und Fette GmbH - Germany or Deutche Cargill GmbH - Germany.
- Fatty acid alcohols, such as the linear long chain fatty acid alcohol NAFOL 1822 (C18, 20, 22) from Condea Chemie GMBH - Germany, having a melting point between 55-60°C. Derivatives of fatty acid alcohols.
- Mono-glycerides and/or di-glycerides, such as glyceryl stearate, wherein stearate is a mixture of stearic and palmitic acid, are useful waxes. An example of this is Dimodan PM - from Danisco Ingredients, Denmark.
- Fatty acids, such as hydrogenated linear long chained fatty acids and derivatives of fatty acids.
- Paraffines, i.e. solid hydrocarbons.
- Micro-crystalline wax.

In further embodiments waxes which are useful in the invention can be found in C.M. McTaggart et. al., Int. J. Pharm. 19, 139 (1984) or Flanders et. al., Drug Dev. Ind. Pharm. 13, 1001 (1987) both incorporated herein by reference.

In a particular embodiment of the present invention the wax of the present invention is a mixture of two or more different waxes.

In a particular embodiment of the present invention the wax or waxes is selected from the group consisting of PEG, fatty acids, fatty acid alcohols and glycerides.

In another particular embodiment of the present invention the waxes are chosen from synthetic waxes. In a more particular embodiment the waxes of the present invention are PEG. In a most particular embodiment of the present invention the wax is selected from the group of beef tallow, PEG and palm oil.

### Fermentation broth

A fermentation broth in accordance with the invention comprises microbial cells and/or cell debris thereof (biomass).

In a preferred embodiment the fermentation broth comprises at least 10% of the biomass, more preferably at least 50%, even more preferably at least 75% and most preferably at least 90% or at least 95% of the biomass originating from the fermentation. In another preferred embodiment the broth contains 0-31 % w/w dry matter, preferably 0-20% w/w, more preferably 0-15% w/w such as 10-15% w/w dry matter, 0% dry matter being excluded from said ranges. The biomass may constitute up to 90% w/w of the dry matter, preferably up to 75% w/w, more preferably up to 50% w/w of the dry matter, while the enzyme may constitute up to 50% w/w of the dry matter, preferably up to 25% w/w, more preferably up to 10% w/w of the dry matter.

### Polysaccharides

The polysaccharides of the present invention may be un-modified naturally occurring polysaccharides or modified naturally occurring polysaccharides.

Suitable polysaccharides include cellulose, pectin, dextrin and starch. The starches may be soluble or insoluble in water.

In a particular embodiment of the present invention the polysaccharide is a starch. In a particular embodiment of the present invention the polysaccharide is an insoluble starch.

Naturally occurring starches from a wide variety of plant sources are suitable in the context of the invention (either as starches per se, or as the starting point for modified starches), and relevant starches include starch from: rice, corn, wheat, potato, oat, cassava, sago-palm, yuca, barley, sweet potato, sorghum, yarns, rye, millet, buckwheat, arrowroot, taro, tannia, and may for example be in the form of flour.

Cassava starch is among preferred starches in the context of the invention; in this connection it may be mentioned that cassava and cassava starch are known under various synonyms, including tapioca, manioc, mandioca and manihot.

As employed in the context of the present invention, the term "modified starch" denotes a naturally occurring starch, which has undergone some kind of at least partial chemical modification, enzymatic modification, and/or physical or physicochemical modification, and which - in general - exhibits altered properties relative to the "parent" starch.

In a particular embodiment of the present invention the granule comprise a polysaccharide.

### Salts

The core may comprise a salt. The salt may be an inorganic salt, e.g. salts of sulfate, sulfite, phosphate, phosphonate, nitrate, chloride or carbonate or salts of simple organic acids (less than 10 carbon atoms e.g. 6 or less carbon atoms) such as citrate, malonate or acetate. Examples of cations in these salt are alkali or earth alkali metal ions, although the ammonium ion or metal ions of the first transition series, such as sodium, potassium, magnesium, calcium, zinc or aluminium. Examples of anions include chloride, iodide, sulfate, sulfite, bisulfite, thiosulfate, phosphate, monobasic phosphate, dibasic phosphate, hypophosphite, dihydrogen pyrophosphate, carbonate, bicarbonate, metasilicate, citrate, malate, maleate, malonate, succinate, lactate, formate, acetate, butyrate, propionate, benzoate, tartrate, ascorbate or gluconate. In particular alkali- or earth alkali metal salts of sulfate, sulfite, phosphate, phosphonate, nitrate, chloride or carbonate or salts of simple organic acids such as citrate, malonate or acetate may be used. Specific examples include NaH₂PO₄, Na₂HPO₄, Na₃PO₄, (NH₄)H₂PO₄, K₂HPO₄, KH₂PO₄, Na₂SO₄, K₂SO₄, KHSO₄, ZnSO₄, MgSO₄, CuSO₄, Mg(NO₃)₂, (NH₄)₂SO₄, sodium borate, magnesium acetate and sodium citrate.

The salt may also be a hydrated salt, i.e. a crystalline salt hydrate with bound water(s) of crystallization, such as described in WO 99/32595. Examples of hydrated salts include magnesium sulfate heptahydrate (MgSO₄(7H₂O)), zinc sulfate heptahydrate (ZnSO₄(7H₂O)), sodium phosphate dibasic heptahydrate (Na₂HPO₄(7H₂O)), magnesium nitrate hexahydrate (Mg(NO₃)₂(6H₂O)), sodium borate decahydrate, sodium citrate dihydrate and magnesium acetate tetrahydrate.

In a particular embodiment of the present invention the binder is a polypeptide. The polypeptide may be selected from gelatin, collagen, casein, chitosan, poly aspartic acid and poly glutamatic acid. In another particular embodiment the binder is a cellulose derivative such as hydroxypropyl cellulose, methyl cellulose or CMC. A suitable binder is a carbohydrate binder such as dextrin e.g Glucidex 21 D or Avedex W80.

### Moisture absorbing materials:

We have found that some granules which are coated with salt have a significant decrease in stability per se. The salt work as a moisture barrier, and if the core is not dry enough prior to coating with the salt, moisture is trapped within the core and can affect the activity of the active compound negatively. We have found that by adding a moisture absorbing compound either to the core and/or to the coating we can solve said problem. In some cases it can be solved by drying the core thoroughly before applying the salt coating.

The moisture absorbing material is present in the granule as a buffer which is able of decreasing water activity within the core by removing free water in contact with the active compound after application of the salt coating. If the moisture absorbing material is added to the core, it is important that there is excessive buffer capacity present after application of the salt coating to remove the water present. The moisture absorbing compound has a water uptake of more than 3%, more than 5%, such as more than 10%. The water uptake is found as the equilibrium water uptake at 25°C and 70% relative humidity after one week. The amount of moisture absorbing compound added to the granule is more than 1%. more than 2%, more than 5%, even more than 10% w/w.

The moisture absorbing materials can be both organic and inorganic compounds and can be but is not limited to the group consisting of flour, starch, corn cob products, cellulose and silica gel.

### Additional granulation materials:

The granule may comprise additional materials such as fillers, fibre materials, stabilizing agents, solubilising agents, suspension agents, viscosity regulating agents, light spheres, plasticizers, salts, lubricants and fragrances.

### Fillers

Suitable fillers are water soluble and/or insoluble inorganic salts such as finely ground alkali sulphate, alkali carbonate and/or alkali chloride, clays such as kaolin (e.g. SPESWHITE™, English China Clay), bentonites, talcs, zeolites, chalk, calcium carbonate and/or silicates.

Typical fillers are di-sodium sulphate and calcium-lignosulphonate. Other fillers are silica, gypsum, kaolin, talc, magnesium aluminium silicate and cellulose fibres.

### Fibre materials

Pure or impure cellulose in fibrous form such as sawdust, pure fibrous cellulose, cotton, or other forms of pure or impure fibrous cellulose. Also, filter aids based on fibrous cellulose can be used. Several brands of cellulose in fibrous form are on the market, e.g. CEPO™ and ARBOCELL™. Pertinent examples of fibrous cellulose filter aids are ARBOCELL BFC 200™ and ARBOCELL BC 200™. Also synthetic fibres may be used as described in EP 304331 B1.

### Stabilizing agents

Stabilising or protective agents such as conventionally used in the field of granulation. Stabilising or protective agents may fall into several categories: alkaline or neutral materials, reducing agents, antioxidants and/or salts of first transition series metal ions. Each of these may be used in conjunction with other protective agents of the same or different categories. Examples of alkaline protective agents are alkali metal silicates, carbonates or bicarbonates. Examples of reducing protective agents are salts of sulfite, thiosulfite, thiosulfate or MnSO₄ while examples of antioxidants are methionine, butylated hydroxytoluene (BHT) or butylated hydroxyanisol (BHA). In particular stabilising agents may be salts of thiosulfates, e.g. sodium thiosulfate or methionine. Still other examples of useful stabilizers are gelatine, urea, sorbitol, glycerol, casein, Poly vinyl pyrrolidone (PVP), hydroxypropylmethylcellulose (HPMC), carboxymethyl cellulose (CMC), hydroxyethylcellulose (HEC), powder of skimmed milk and/or edible oils, such as soy oil or canola oil. Particular stabilizing agents in feed granules are a lactic acid source or starch. In a particular embodiment of the present invention the granule comprise a lactic acid source according to patent application no. EP 1,117,771 which is hereby incorporated as reference. A preferred lactic acid source is corn steep liquor. It is also well known in the art that enzyme substrates such as starch, lipids, proteins etc can act as stabilizers for enzymes.

### Solubilising agents

As is known by the person skilled in the art, many agents, through a variety of methods, serve to increase the solubility of formulations, and typical agents known to the art can be found in National Pharmacopeia's.

### Light spheres:

Light spheres are small particles with low true density. Typically, they are hollow spherical particles with air or gas inside. Such materials are usually prepared by expanding a solid material. These light spheres may be inorganic of nature or organic of nature. Polysaccharides are preferred, such as starch or derivatives thereof. Biodac® is an example of non-hollow lightweight material made from cellulose (waste from papermaking), available from GranTek Inc. These materials may be included in the granules of the invention either alone or as a mixture of different light materials.

### Suspension agents:

Suspension agents, mediators and/or solvents may be incorporated.

### Viscosity regulating agents:

Viscosity regulating agents may be present.

### Plasticizers:

Plasticizers of the present invention include, for example: polyols such as sugars, sugar alcohols, glycerine, glycerol trimethylol propane, neopentyl glycol, triethanolamine, mono-, di- and triethylene glycol or polyethylene glycols (PEGs) having a molecular weight less than 1000; urea and water.

### Lubricants:

As used in the present context, the term "lubricant" refers to any agent, which reduces surface friction, lubricates the surface of the granule, decreases tendency to build-up of static electricity, and/or reduces friability of the granules. Lubricants can serve as anti-agglomeration agents and wetting agents. Examples of suitable lubricants are lower polyethylene glycols (PEGs) and mineral oils. The lubricant is particularly a mineral oil or a nonionic surfactant, and more particularly the lubricant is not miscible with the other materials.

### The salt coating

The granule of the present invention comprise besides a core at least one coating which is here to be understood as the layer surrounding the core.

The coating which comprises a salt, may in a particular embodiment of the present invention comprise at least 60% w/w, e.g. 65% w/w or 70% w/w salt, which in particular may be at least 75% w/w, e.g. at least 80% w/w, at least 85% w/w, e.g. at least 90% w/w or at least 95% w/w, even at least 99% w/w.

In a particular embodiment of the present invention the amount of salt in the coating of the granule constitute at least 60% w/w of the coating.

In a particular embodiment of the present invention the amount of salt in the coating of the granules in the steam treated pelletized feed composition constitutes at least 60% w/w of the coating.

In a particular embodiment of the present invention the amount of salt in the coating of the the granules to be used for steam treated pelletized feed compositions constitutes at least 60% w/w of the coating.

Depending on the size of the core material the coating may be applied in 1-200% w/w of the weight of the coated granule to obtain a desired size of the coated granule. Usually coatings constitute 5-150% w/w, particularly 10-100% w/w, even more particular 20-80% w/w, most particularly 40-60% w/w of the coated granule. However in some cases particularly when using small core sizes the coating may constitute as much as 15-50% or even 50-75% w/w of the coated granule.

The effect of the salt coating depends on the thickness of the coating. An increased coating thickness provides a better protection of the active compound, but at the same time result in increased manufacturing costs.

To be able to provide acceptable protection the salt coating preferably have a certain thickness. In a particular embodiment of the present invention the salt coating is at least 1 µm thick. In a more particular embodiment the thickness of the salt coating is at least 2 µm. In an even more particular embodiment the total thickness of the salt coating is at least 4 µm. In a most particular embodiment the total thickness of the salt coating is at least 8 µm. The thicker the coating the more time consuming and expensive it gets to produce the granule. In a particular embodiment of the present invention the thickness of the salt coating is below 100 µm. In a more particular embodiment the thickness of the salt coating is below 60 µm. In an even more particular embodiment the total thickness of the salt coating is below 40 µm.

In a particular embodiment of the present invention the thickness of the salt coating of the granule of the present invention is at least 8 µm.

In a particular embodiment of the present invention the thickness of the salt coating of the steam treated pelletized feed composition is at least 8 µm.

In a particular embodiment of the present invention the thickness of the salt coating of the granules to be used for steam treated pelletized feed compositions is at least 8 µm.

In one embodiment the coated granule is a granule according to WO 01/25412, where the core unit is smaller than cores known to the art and the coating is thicker than coatings known to the art. For such granules the ratio between the diameter of the coated granule and the diameter of the core unit (abbreviated DG/DC) for this type of granules will usually be DG/DC is at least 1.1, particularly at least 1.5, more particularly at least 2, more particularly at least 2.5, more particularly at least 3, most particularly at least 4. DG/DC is however particularly below about 100, particularly below about 50, more particularly below 25, and most particularly below 10. A particularly range for DG/DC is about 4 to about 6. Thus for such granules the thickness of the coating should be at least 25 µm. A particular thickness is at least 50 µm such as at least 75 µm, at least 100 µm, at least 150 µm, at least 200 µm, at least 250 µm or particularly at least 300 µm. The thickness of this kind of coating is usually below 800 µm. A particular thickness is below 500 µm such as below 350 µm, below 300 µm, below 250 µm, below 200 µm, below 150 µm or particularly below 80 µm.

The coating should encapsulate the core unit by forming a substantially continuous layer. A substantially continuous layer is to be understood in the present invention as a coating having few or none holes, so that the core unit it is encapsulating has few or none uncoated areas. The layer or coating should in particular be homogenous in thickness.

The salt to be added is preferably in the form of a salt solution or a salt suspension wherein the fine particles is less than 5 µm, such as less than 1 µm.

In a particular embodiment of the present invention it is preferred to use a solution of salt as salt coating, but if the used salts have low solubility it can be preferable to use a suspension of salt instead of a solution, to be able to add more salt pr. litre liquid added to the granules. In a particular embodiment of the present invention the salt coating is prepared in accordance with the coating in WO 03/55967.

### Salts:

Referring to the salt in the salt coating it can either be one particular salt or a mixture of salts.

The salt used may be an inorganic salt, e.g. salts of sulfate, sulfite, phosphate, phosphonate, nitrate, chloride or carbonate or salts of simple organic acids (less than 10 carbon atoms e.g. 6 or less carbon atoms) such as citrate, malonate or acetate. Examples of cations in these salt are alkali or earth alkali metal ions, although the ammonium ion or metal ions of the first transition series, such as sodium, potassium, magnesium, calcium, zinc or aluminium. Examples of anions include chloride, bromide, iodide, sulfate, sulfite, bisulfite, thiosulfate, phosphate, monobasic phosphate, dibasic phosphate, hypophosphite, dihydrogen pyrophosphate, tetraborate, borate, carbonate, bicarbonate, metasilicate, citrate, malate, maleate, malonate, succinate, lactate, formate, acetate, butyrate, propionate, benzoate, tartrate, ascorbate or gluconate. In particular alkali- or earth alkali metal salts of sulfate, sulfite, phosphate, phosphonate, nitrate, chloride or carbonate or salts of simple organic acids such as citrate, malonate or acetate may be used. Specific examples include NaH₂PO₄, Na₂HPO₄, Na₃PO₄, (NH₄)H₂PO₄, K₂HPO₄, KH₂PO₄, Na₂SO₄, K₂SO₄, KHSO₄, ZnSO₄, MgSO₄, CuSO₄, Mg(NO₃)₂, (NH₄)₂SO₄, sodium borate, magnesium acetate and sodium citrate.

The salt may also be a hydrated salt, i.e. a crystalline salt hydrate with bound water(s) of crystallization, such as described in WO 99/32595. Examples of hydrated salts include magnesium sulfate heptahydrate (MgSO₄(7H₂O)), zinc sulfate heptahydrate (ZnSO₄(7H₂O)), sodium phosphate dibasic heptahydrate (Na₂HPO₄(7H₂O)), magnesium nitrate hexahydrate (Mg(NO₃)₂(6H₂O)), sodium borate decahydrate, sodium citrate dihydrate and magnesium acetate tetrahydrate.

It has however surprisingly been found that some hydrated salts have a negative influence on the stability of the granules per se and on the pelleting stability. Questionable hydrated salts are salts comprising water molecules which can separate from the salt after application of the salt coating and thereafter migrate into the core where a water sensitive active compound is present. In a particular embodiment of the present invention the coating does not comprise a hydrated salt. In a more particular embodiment of the present invention the coating does not comprise a salt comprising more than four water molecules at 50°C.

In a particular embodiment of the present invention the salt used in the coating has a constant humidity at 20°C above 60%. In a more particular embodiment of the present invention the salt used in the coating has a constant humidity at 20°C above 70%. In an even more particular embodiment of the present invention the salt used in the coating has a constant humidity at 20°C above 80%. In a most particular embodiment of the present invention the salt used in the coating has a constant humidity at 20°C above 85%. In a particular embodiment of the present invention the salt coating is prepared according to WO 00/01793, which is hereby incorporated by reference.

In a particular embodiment of the present invention the salt comprised in the coating of the granule of the present invention has a constant humidity at 20°C above 60 %.

In a particular embodiment of the present invention the salt comprised in the coating of the granule of the steam treated pelletized feed composition has a constant humidity at 20°C above 60%.

In a particular embodiment of the present invention the salt comprised in the coating of the granules to be used for steam treated pelletized feed compositions has a constant humidity at 20°C above 60%.

In a particular embodiment of the present invention the salt has a constant humidity at 20°C which is above 60%.

In a particular embodiment of the present invention the Specific examples of suitable salts of the invention are NaCl (CH_{20°C}=76%), Na₂CO₃ (CH_{20°C}=92%), NaNO₃ (CH_{20°C}=73%), Na₂HPO₄ (CH_{20°C}=95%), Na₃PO₄ (CH_{25°C}=92%), NH₄Cl (CH_{20°C} = 79.5%), (NH₄)₂HPO₄ (CH_{20°C} = 93,0%), NH₄H₂PO₄ (CH_{20°C} = 93.1%), (NH₄)₂SO₄ (CH_{20°C}=81.1%), KCI (CH_{20°C}=85%), K₂HPO₄ (CH_{20°C}=92%), KH₂PO₄ (CH_{20°C}=96.5%), KNO₃ (CH_{20°C}=93.5%), Na₂SO₄ (CH_{20°C}=93%), K₂SO₄ (CH_{20°C}=98%), KHSO₄ (CH_{20°C}=86%), MgSO₄ (CH_{20°C}=90%), ZnSO₄ (CH_{20°C}=90%) and sodium citrate (CH_{25°C}=86%).

In a particular embodiment of the present invention the salt is selected from the group consisting of NaCl, Na₂CO₃, NaNO₃, Na₂HPO₄, Na₃PO₄, NH₄Cl, (NH₄)₂HPO₄, NH₄H₂PO₄, (NH₄)₂SO₄, KCl, K₂HPO₄, KH₂PO₄, KNO₃, Na₂SO₄, K₂SO₄, KHSO₄, MgSO₄, ZnSO₄, NaCl and sodium citrate or mixtures thereof. In a more particular embodiment of the present invention the salt is selected from the group consisting of NaCl, Na₂CO₃, NaNO₃, Na₂HPO₄, Na₃PO₄, NH₄Cl, (NH₄)₂HPO₄, NH₄H₂PO₄, (NH₄)₂SO₄, KCl, K₂HPO₄, KH₂PO₄, KNO₃, Na₂SO₄, K₂SO₄, KHSO₄, NaCl and sodium citrate or mixtures thereof.

In a particular embodiment of the present invention the salt comprised in the coating of the granule of the present invention is selected from the group consisting of NaCl, Na₂CO₃, Na-NO₃, Na₂HPO₄, Na₃PO₄, NH₄Cl, (NH₄)₂HPO₄, NH₄H₂PO₄, (NH₄)₂SO₄, KCl, K₂HPO₄, KH₂PO₄, KNO₃, Na₂SO₄, K₂SO₄, KHSO₄, MgSO₄, ZnSO₄, NaCl and sodium citrate or mixtures thereof

In a particular embodiment of the present invention the salt comprised in the coating of the granule of the steam treated pelletized feed composition is selected from the group of NaCl, Na₂CO₃, NaNO₃, Na₂HPO₄, Na₃PO₄, NH₄Cl, (NH₄)₂HPO₄, NH₄H₂PO₄, (NH₄)₂SO₄, KCl, K₂HPO₄, KH₂PO₄, KNO₃, Na₂SO₄, K₂SO₄, KHSO₄, MgSO₄, ZnSO₄, NaCl and sodium citrate or mixtures thereof

In a particular embodiment of the present invention the salt comprised in the coating of the the granules to be used for steam treated pelletized feed compositions is selected from the group of NaCl, Na₂CO₃, NaNO₃, Na₂HPO₄, Na₃PO₄, NH₄Cl, (NH₄)₂HPO₄, NH₄H₂PO₄, (NH₄)₂SO₄, KCl, K₂HPO₄, KH₂PO₄, KNO₃, Na₂SO₄, K₂SO₄. KHSO₄, MgSO₄, ZnSO₄, NaCl and sodium citrate or mixtures thereof

### Additional coatings

The granules of the present invention may comprise one, two or more additional coating layers on the inside or outside surface of the protective coating according to the invention.

Additional coatings may be applied to the granule to provide additional characteristics or properties. Thus, for example, an additional coating may achieve one or more of the following effects:
(i) reduction of the dust-formation tendency of a granule;
(ii) protection of the active compound in the granule against hostile compounds in the surroundings.
(iii) dissolution at a desired rate upon introduction of the granule into a liquid medium (such as an acid medium);
(iv) provide a better physical strength of the granule.

Any additional conventional coating(s) of desired properties may be applied and examples of conventional coating materials and coating methods is, *inter alia,* described in US 4,106,991, EP 170360, EP 304332, EP 304331, EP 458849, EP 458845, WO 97/39116, WO 92/12645, WO 89/08695, WO 89/08694, WO 87/07292, WO 91/06638, WO 92/13030, WO 93/07260, WO 93/07263, WO 96/38527, WO 96/16151, WO 97/23606, US 5,324,649, US 4,689,297, EP 206417, EP 193829, DE 4344215, DE 4322229 A, DD 263790, JP 61162185 A, JP 58179492 or PCT/DK/01/00628.

In a particular embodiment of the present invention the additional coating is a wax coating, according to US 4,106,991 or EP 0,569,468 which is hereby incorporated by reference. For suitable waxes see the section "Waxes" above. In a particular embodiment of the present invention an additional coating may comprise PEG and/or palm oil.

### Additional Coating materials:

The coating may comprise additional coating materials such as binders, fillers, fibre materials, enzyme stabilizing agents, solubilising agents, suspension agents, viscosity regulating agents, light spheres, plasticizers, salts, lubricants and fragrances as mentioned in the section "additional granulation materials" above. Further coating ingredients may be pigments.

### Pigments

Suitable pigments include, but are not limited to, finely divided whiteners, such as titanium dioxide or kaolin, coloured pigments, water soluble colorants, as well as combinations of one or more pigments and water soluble colorants.

Optionally, the granules can be coated with a coating mixture. Such mixtures may comprise but are not limited to coating agents, preferably hydrophobic coating agents, such as hydrogenated palm oil and beef tallow, and if desired other additives, such as calcium carbonate or kaolin.

In a particular embodiment of the present invention the granule of the present invention further comprise a wax coating.

In a particular embodiment of the present invention the granule of the steam treated pelletized feed composition comprises a wax coating.

In a particular embodiment of the present invention the granules to be used for steam treated pelletized feed compositions comprises a wax coating.

In a particular embodiment of the present invention the granule of the present invention further comprise a lactic acid source.

In a particular embodiment of the present invention the granule of the steam treated pelletized feed composition comprises a lactic acid source.

In a particular embodiment of the present invention the granule to be used for steam treated pelletized feed compositions comprises a lactic acid source.

In a particular embodiment of the present invention the granule of the present invention further comprise dry matter of corn steep liquor.

In a particular embodiment of the present invention the granule of the steam treated pelletized feed composition comprises dry matter of corn steep liquor.

In a particular embodiment of the present invention the granule to be used for steam treated pelletized feed compositions comprises dry matter of corn steep liquor.

### Preparation of the core

The core an active compound in the form of concentrated dry matter. The concentrated dry matter can be but is not limited to the preparation by spray drying.

Methods for preparing the core can be found in Handbook of Powder Technology; Particle size enlargement by C. E. Capes; Volume 1; 1980; Elsevier. Preparation methods include known feed and granule formulation technologies, i.e.:
a) Spray dried products, wherein a liquid active compound-containing solution is atomized in a spray drying tower to form small droplets which during their way down the drying tower dry to form an active compound-containing particulate material. Very small particles can be produced this way (Michael S. Showell (editor); Powdered detergents; Surfactant Science Series; 1998; vol. 71; page 140-142; Marcel Dekker).
b) Layered products, wherein the active compound is coated as a layer around a pre-formed inert core particle, wherein an active compound-containing solution is atomized, typically in a fluid bed apparatus wherein the pre-formed core particles are fluidized, and the active compound-containing solution adheres to the core particles and dries up to leave a layer of dry active compound on the surface of the core particle. Particles of a desired size can be obtained this way if a useful core particle of the desired size can be found. This type of product is described in e.g. WO 97/23606
c) Absorbed core particles, wherein rather than coating the active compound as a layer around the core, the active compound is absorbed onto and/or into the surface of the core. Such a process is described in WO 97/39116.
d) Extrusion or pelletized products, wherein an active compound-containing paste is pressed to pellets or under pressure is extruded through a small opening and cut into particles which are subsequently dried. Such particles usually have a considerable size because of the material in which the extrusion opening is made (usually a plate with bore holes) sets a limit on the allowable pressure drop over the extrusion opening. Also, very high extrusion pressures when using a small opening increase heat generation in the active compound paste, which is harmful to the active compound. (Michael S. Showell (editor); Powdered detergents; Surfactant Science Series; 1998; vol. 71; page 140-142; Marcel Dekker)
e) Prilled products, wherein an active powder is suspended in molten wax and the suspension is sprayed, e.g. through a rotating disk atomiser, into a cooling chamber where the droplets quickly solidify (Michael S. Showell (editor); Powdered detergents; Surfactant Science Series; 1998; vol. 71; page 140-142; Marcel Dekker). The product obtained is one wherein the active compound is uniformly distributed throughout an inert material instead of being concentrated on its surface. Also US 4,016,040 and US 4,713,245 are documents relating to this technique
f) Mixer granulation products, wherein an active-containing liquid is added to a dry powder composition of conventional granulating components. The liquid and the powder in a suitable proportion are mixed and as the moisture of the liquid is absorbed in the dry powder, the components of the dry powder will start to adhere and agglomerate and particles will build up, forming granulates comprising the active compound. Such a process is described in US 4,106,991 (NOVO NORDISK) and related documents EP 170360 B1 (NOVO NORDISK), EP 304332 B1 (NOVO NORDISK), EP 304331 (NOVO NORDISK), WO 90/09440 (NOVO NORDISK) and WO 90/09428 (NOVO NORDISK). In a particular product of this process wherein various high-shear mixers can be used as granulators, granulates consisting of enzyme as active compound, fillers and binders etc. are mixed with cellulose fibres to reinforce the particles to give the so-called T-granulate. Reinforced particles, being more robust, release less enzymatic dust.
g) Size reduction, wherein the cores are produced by milling or crushing of larger particles, pellets, tablets, briquettes etc. containing the active material. The wanted core particle fraction is obtained by sieving the milled or crushed product. Over and undersized particles can be recycled. Size reduction is described in (Martin Rhodes (editor); Principles of Powder Technology; 1990; Chapter 10; John Wiley & Sons).
h) Fluid bed granulation. Fluid bed granulation involves suspending particulates in an air stream and spraying a liquid onto the fluidized particles via nozzles. Particles hit by spray droplets get wetted and become tacky. The tacky particles collide with other particles and adhere to them and form a granule.
i) The cores may be subjected to drying, such as in a fluid bed drier. Other known methods for drying granules in the feed or enzyme industry can be used by the skilled person. The drying preferably takes place at a product temperature of from 25 to 90°C. For some active compounds it is important the cores comprising the active compound contain a low amount of water before coating with the salt. If water sensitive active compounds are coated with a salt before excessive water is removed, it will be trapped within the core and it may affect the activity of the active compound negatively. After drying, the cores preferably contain 0.1-10 % w/w water.

### Preparation of the salt coating

The salt coating may be applied onto the core granule comprising the active compound by atomization onto the core granules in a fluid bed, the salt coating may further be applied in vacuum mixers, drageé type coaters (pan-drum coaters), equipment for coating of seeds, equipment comprising rotating bottoms (eks. Roto Glatt, CF granulators (Freund), torbed processors (Gauda) or in rotating fluid bed processors such as Omnitex (Nara).

After applying the salt layer the granule may optionally be dried. The drying of the salt coated granule can be achieved by any drying method available to the skilled person, such as spray-drying, freeze drying, vacuum drying, fluid bed drying, pan drum coating and microwave drying. Drying of the salt coated granule can also be combined with granulation methods which comprise e.g. the use of a fluid bed, a fluid bed spray dryer (FSD) or a Multi-stage dryer (MSD).

### Preparation of additional coating

Conventional coatings and methods as known to the art may suitably be used, such as the coatings described in Danish PA 2002 00473, WO 89/08694, WO 89/08695, 270 608 B1 and/or WO 00/01793. Other examples of conventional coating materials may be found in US 4,106,991, EP 170360, EP 304332, EP 304331, EP 458849, EP 458845, WO 97/39116, WO 92/12645A, WO 89/08695, WO 89/08694, WO 87/07292, WO 91/06638, WO 92/13030, WO 93/07260, WO 93/07263, WO 96/38527, WO 96/16151, WO 97/23606, WO 01/25412, WO 02/20746, WO 02/28369, US 5879920, US 5,324,649, US 4,689,297, US 6,348,442, EP 206417, EP 193829, DE 4344215, DE 4322229 A, DE 263790, JP 61162185 A and/or JP 58179492.

The coating may be prepared by the same methods as mentioned above in the section "Preparation of the core" and "Preparation of the salt coating".

The granules obtained can be subjected to rounding off (e.g. spheronisation), such as in a Marumeriser^{™}, or compaction.

The granules can be dried, such as in a fluid bed drier. Other known methods for drying granules in the feed or enzyme industry can be used by the skilled person. The drying preferably takes place at a product temperature of from 25 to 90°C.

### Manufacturing of feed pellets

In the manufacturing of feed pellets it is preferred to involve steam treatment prior to pelleting, a process called conditioning. In the subsequent pelleting step the feed is forced through a die and the resulting strands are cut into suitable pellets of variable length. During this conditioning step the process temperature may rise to 60-100°C.

The feed mixture is prepared by mixing the granules comprising the active compound with desired feed components. The mixture is led to a conditioner e.g. a cascade mixer with steam injection. The feed is in the conditioner heated up to a specified temperature, 60-100°C, e.g. 60°C, 70°C, 80°C, 90°C or 100°C by injecting steam, measured at the outlet of the conditioner. The residence time can be variable from seconds to minutes and even hours. Such as 5 seconds, 10 seconds, 15 seconds, 30 seconds, 1 minute, 2 minutes, 5 minutes, 10 minutes, 15 minutes, 30 minutes and 1 hour. In a particular embodiment of the present invention the temperature is 100°C and the residence time is 60 seconds.

In a particular embodiment of the present invention the process temperature during steam treatment is at least 60°C. In a more particular embodiment of the present invention the process temperature during steam treatment is at least 70°C. In an even more particular embodiment of the present invention the process temperature during steam treatment is at least 80°C. In a most particular embodiment of the present invention the process temperature during steam treatment is at least 90°C.

From the conditioner the feed is led to a press e.g. a Simon Heesen press, and pressed to pellets with variable length e.g. 15 mm. After the press the pellets are placed in an air cooler and cooled for a specified time e.g. 15 minutes.

A particular embodiment of the present invention is a method for manufacturing a feed composition comprising the steps of:
i. mixing feed components with granules comprising a core and a coating wherein the core comprises an active compound and the coating comprises a salt,
ii. steam treating said composition (i), and
iii. pelleting said composition (ii).

Where the granules furthermore may comprise one or more of the following:
i. the amount of salt in the coating constitute at least 60% w/w of the coating,
ii. the salt comprised in the coating has a constant humidity at 20°C above 60 %,
iii. the salt comprised in the coating of the granule is selected from the group consisting of NaCl, Na₂CO₃, NaNO₃. Na₂HPO₄, Na₃PO₄, NH₄Cl, (NH₄)₂HPO₄, NH₄H₂PO₄, (NH₄)₂SO₄, KCl, K₂HPO₄, KH₂PO₄, KNO₃, Na₂SO₄, K₂SO₄, KHSO₄, MgSO₄, ZnSO₄, NaCl and sodium citrate or mixtures thereof
iv. the particle size of the granule is below 400 µm,
v. the thickness of the salt coating is at least 8 µm,
vi. the active compound is thermo labile,
vii. the granule further comprise a wax coating,
viii. the granule further comprise a lactic acid source, and
ix. the active compound in the core of the granule is an enzyme.

### Animal Feed

The granule of the present invention is suitable for use in animal feed compositions. The granule is mixed with feed substances. The characteristics of the granule allows its use as a component of a composition which is well suited as an animal feed, which is steam treated and subsequently pelletized.

The term animal includes all animals. Examples of animals are non-ruminants, and ruminants, such as cows, sheep and horses. In a particular embodiment, the animal is a non-ruminant animal. Non-ruminant animals include mono-gastric animals, e.g. pigs or swine (including, but not limited to, piglets, growing pigs, and sows); poultry such as turkeys and chicken (including but not limited to broiler chickens, layers); young calves; and fish (including but not limited to salmon).

The term feed or feed composition means any compound, preparation, mixture, or composition The feed of the present invention may comprise vegetable proteins. The term vegetable proteins as used herein refers to any compound, composition, preparation or mixture that includes at least one protein derived from or originating from a vegetable, including modified proteins and protein-derivatives. In particular embodiments, the protein content of the vegetable proteins is at least 10, 20, 30, 40, 50, or 60% (w/w).

Vegetable proteins may be derived from vegetable protein sources, such as legumes and cereals, for example materials from plants of the families Fabaceae *(Leguminosae), Cruciferaceae, Chenopodiaceae,* and Poaceae, such as soy bean meal, lupin meal and rapeseed meal.

In a particular embodiment, the vegetable protein source is material from one or more plants of the family Fabaceae, e.g. soybean, lupine, pea, or bean.

In another particular embodiment, the vegetable protein source is material from one or more plants of the family *Chenopodiaceae,* e.g. beet, sugar beet, spinach or quinoa.

Other examples of vegetable protein sources are rapeseed, and cabbage.

Soybean is a preferred vegetable protein source.

Other examples of vegetable protein sources are cereals such as barley, wheat, rye, oat, maize (corn), rice, and sorghum.

Suitable animal feed additives are enzyme inhibitors, fat-soluble vitamins, water soluble vitamins, trace minerals and macro minerals.

Further, optional, feed-additive ingredients are colouring agents, aroma compounds, stabilisers, antimicrobial peptides, and/or at least one other enzyme selected from amongst phytases EC 3.1.3.8 or 3.1.3.26; xylanases EC 3.2.1.8; galactanases EC 3.2.1.89; and/or beta-glucanases EC 3.2.1.4.

Examples of anti microbial peptides (AMP's) are CAP18, Leucocin A, Tritrpticin, Protegrin-1, Thanatin, Defensin, Ovispirin such as Novispirin (Robert Lehrer, 2000), and variants, or fragments thereof which retain antimicrobial activity.

Examples of anti fungal polypeptides (AFP's) are the *Aspergillus giganteus,* and *Aspergillus niger* peptides, as well as variants and fragments thereof which retain antifungal activity, as disclosed in WO 94/01459 and PCT/DK02/00289.

Usally fat- and water-soluble vitamins, as well as trace minerals form part of a so-called premix intended for addition to the feed, whereas macro minerals are usually separately added to the feed.

The following are non-exclusive lists of examples of these components:

### Examples of fat-soluble vitamins are vitamin A, vitamin D3, vitamin E, and vitamin K, e.g. vitamin K3.

Examples of water-soluble vitamins are vitamin B12, biotin and choline, vitamin B1, vitamin B2, vitamin B6, niacin, folic acid and panthothenate, e.g. Ca-D-panthothenate.

Examples of trace minerals are manganese, zinc, iron, copper, iodine, selenium, and cobalt.

Examples of macro minerals are calcium, phosphorus and sodium.

In still further particular embodiments, the animal feed composition of the invention contains 0-80% maize; and/or 0-80% sorghum; and/or 0-70% wheat; and/or 0-70% Barley; and/or 0-30% oats; and/or 0-40% soybean meal; and/or 0-10% fish meal; and/or 0-20% whey.

The present invention is further described by the following examples which should not be construed as limiting the scope of the invention.

### EXAMPLES

### Example 1

### Granule 1:

5 kg Na₂SO₄ cores sieved to 180-250 microns was loaded into a Niro MP-1 top-spray fluid bed. The following mixture was coated onto the cores:

| | |
|---|---|
| 450 g | Phytase concentrate |
| 50 g | Dextrin, Avedex W80 |
| 265 g | Corn steep liquor powder |
| 265 g | Wheat starch |
| 3300 g | Water |

### Granule 2:

3.0 kg of granule 1 was loaded into a Niro MP-1 top-spray fluid bed.

The following mixture was coated onto the cores:

| | |
|---|---|
| 1200 g | Na₂SO₄ |
| 50 g | Dextrin, Avedex W80 |
| 3200 g | Water |

### Granule 3:

3.0 kg of granule 1 was loaded into a MP-1 top spray fluid bed.

The following mixture was coated onto the cores:

| | |
|---|---|
| 1200 g | MgSO₄·7H₂O |
| 50 g | Dextrin, Avedex W80 |
| 2000 g | Water |

### Magnesium sulfate is after coating still hydrated with at least 6 water molecules

The following bed settings were used during coating of granule 1, 2 and 3:
Air flow: 175 kg/h
Inlet air temperature: 80°C
Product temperature: 42-46°
1.2 mm nozzle
3.6 bar nozzle pressure
After coating the granules were dried to a product temperature of 60°C

### Granule 4:

Small phytase cores was prepared by spray drying and subsequently coated.

### Spray-feed 1 (sulfate suspension kept at 45-50 °C):

14560 g Na₂SO₄
3200 g Talc (magnesium silicate)
2080 g Dextrin, Avedex W80
12160 g Water
Spray feed 2 (enzyme solution kept at 20-25°C):
19840 g Phytase concentrate
4800 g Corn steep liquor powder
4800 g Wheat starch
2560 g Water

The two spray-feeds were dosed via peristaltic pumps at a rate of 500 g/minutes and mixed in a static mixer just before entering the spray-dryer (Bontech 1038DAN). The inlet air temperature in the spray dryer was 140°C and the outlet powder temperature 44-46°C.

The powder was sieved between 125 and 180 microns.

3 kg sieved cores were coated on the MP-1 with the following mixture:
3045 g Na₂SO₄
105 g Dextrin, Avedex W80
7350 g Water

During this coating the following fluid bed setting was used:
Air flow: 80-110 kg/h
Inlet air temperature = 70-90°C
Product temperature 40-43°
1.2 mm nozzle
3.0 bar nozzle pressure
After coating the products were dried to a product temperature of 60°C

The particles were enlarged by spraying the following dispersion onto the salt coated cores in the MP-1:
10451 g Na₂SO₄
968 g Precipitated CaCO₃ (PCC)
581 g Dextrin, Avedex W80
7353 g Water

During this enlargement the following fluid bed setting was used:
Air flow: 110-130 kg/h
Inlet air temperature = 80-92°C
Product temperature 39-41°C
1.2 mm nozzle
3.6 bar nozzle pressure
After coating the products were dried to a product temperature of 60°C

### Granule 5:

A feed granulate was produced as described in WO 92/12645 example 2 (T-granulate, however with phytase concentrate and using hydrogenated palm oil as coating material instead of hydrogenated beef tallow).

### Measurements of pelleting stability

Granule 1 to 5 were pelletized using very harsh conditions.

### Experimental set-up:

Approximately 50 g enzyme granulate was pre-mixed with 10 kg feed for 10 minutes in a small horizontal mixer. This premix was mixed with 90 kg feed for 10 minutes in a larger horizontal mixer. From the mixer the feed was led to the conditioner (a cascade mixer with steam injection) at a rate of approximately 300 kg/hour. The conditioner heated up the feed to 100°C (measured at the outlet) by injecting steam. The residence time in the conditioner was 60-70 seconds. From the conditioner the feed was led to a Simon Heesen press equipped with 3.0x35 mm horizontal die and pressed to pellets with a length of around 15 mm. After the press the pellets were placed in an air cooler and cooled for 15 minutes.

Feed formulation:
74.0 % Grind wheat
20.7 % Toasted soy grits
5.0 % Soy oil
0.3 % Solivit Mikro 106 (commercial mixture of minerals and vitamins from Løvens Kemiske Fabrik, Denmark)
Water content: 12.0%

The activity of the ingoing enzyme granulates and the activities of the final pellets were analyzed and from these figures the residual activity was calculated. The figures were corrected for the blind levels of phytase in a feed sample without enzyme before and after pelleting.

### Pelleting trial results:

| Formulation | Comprrising | | Particle size, microns | % residual activity |
|---|---|---|---|---|
| Product 1 | Granule 1 | uncoated | 273 | 51 |
| Product 2 | Granule 2 | Na₂SO₄ | 299 | 77 |
| Product 3 | Granule 3 | MgSO₄·7H₂O | 508 | 64 |
| Product 4 | Granule 4 | Na₂SO₄ | 233 | 81 |
| Product 5 | Granule 5 | wax coated | 500 | 71 |

| | | | | |
|---|---|---|---|---|
| * The large particle size is due to agglomeration occurring during the salt coating. The "primary" particles are around 300 microns. | | | | |

From the results it is evident that a salt coating is improving pelleting stability significantly. The sodium sulfate coating is somewhat more efficient than the magnesium sulfate heptahydrate coating. The stability of the sodium sulfate coated granulates are better than that of the wax coated granules.

### Example 2

### Granule 6:

4 kg Na₂SO₄ cores sieved to 180-250 microns was loaded into a MP-1 top spray fluid bed and coated with:
500 g Phytase concentrate
40 g Dextrin, Avedex W80
210 g Corn steep liquor powder
210 g Wheat starch
2300 g Water

### Granule 7:

3 kg granule 6 was coated on the MP-1 with:
1200 g Na₂SO₄
50 g Dextrin, Avedex W80
3200 g Water

### Granule 8:

4 kg Na₂SO₄ cores sieved to 180-250 microns was loaded into a MP-1 top spray fluid bed and coated with:
640 g Phytase concentrate
40 g Dextrin, Avedex W80
210 g Corn steep liquor powder
210 g Wheat starch
2200 g Water

### Granule 9:

3 kg granule 8 was loaded into a MP-1 top spray fluid bed and coated with:
2400 g Na₂SO₄
100 g Dextrin, Avedex W80
6400 g Water

### Granule 10:

4 kg Na₂SO₄ cores sieved to 180-250 microns was loaded into a MP-1 top spray fluid bed and coated with:
550 g Phytase concentrate
40 g Dextrin, Avedex W80
210 g Corn steep liquor powder
210 g Wheat starch
500 g Grinded Farigel (gelatinized flour from Westhove)
2200 g Water

### Granule 11:

3 kg of granule 10 was loaded into the MP-1 and coated with:
1200 g Na₂SO₄
50 g Dextrin, Avedex W80
3200 g Water

### Granule 12:

3 kg of granule 6 was loaded into the MP-1 and coated with:
1200 g (NH₄)₂SO₄
2000 g Water

The following fluid bed setting was used above when coating enzyme onto the cores:
Air flow: 220 kg/h
Inlet air temperature = 70°C
Product temperature 42-46°C
1.2 mm nozzle
3.0 bar nozzle pressure
After coating the products were dried to a product temperature of 60°C.

The following fluid bed setting was used above when coating with salt onto the enzyme:
Air flow: 270 kg/h
Inlet air temperature = 90°C
Product temperature 45-55°C
1.2 mm nozzle
3.0 bar nozzle pressure
After coating the products were dried to a product temperature of 60°C

### Pelleting stability

Product 6, 7, 8, 9 and 10 comprising granule 7, 9, 11, 12 and 5 respectively were pelletized using the conditions given in example 1, except that the water content in the feed was lowered to 10.1 % by drying of the ingoing wheat (giving somewhat less harsh pelleting conditions)

| Product | Comprising | | Particle size, microns | % residual activity |
|---|---|---|---|---|
| Product 6 | Granule 7 | Na₂SO₄ | 336 | 89 |
| Product 7 | Granule 9 | Na₂SO₄ | 433 | 91 |
| Product 8 | Granule 11 | Na₂SO₄ | 346 | 88 |
| Product 9 | Granule 12 | (NH₄)₂SO₄ | 469 | 81 |
| Product 10 | Granule 5 | wax | 500 | 73 |

| | | | | |
|---|---|---|---|---|
| * The large particle size is due to agglomeration occurring during the salt coating. The primary particles are around 340 microns. | | | | |

From the experiments it is clear that a salt coating improve pelleting stability significantly, and the stability is better than that of known wax coated granules.

## Claims

1. A granule comprising a core which comprises an *Escherichia coli* phytase and a coating which comprises a salt.

2. The granule of claim 1 wherein the salt in the coating has a constant humidity at 20°C above 60%.

3. The granule of claim 1 wherein the salt in the coating is Na₂SO₄.

4. The granule of any of claims 1-3 wherein the coating comprises at least 60% w/w of the salt.

5. The granule of any of claims 1-4 wherein the coating has a thickness of at least 8 µm.

6. The granule of any of claims 1-5 which has a ratio between the diameter of the coated granule and the diameter of the core unit of at least 1.1.

7. The granule of any of claims 1-6 wherein the core is an inert particle with the phytase applied onto it.

8. The granule of claim 7 wherein the inert particle is a starch, a sugar or a salt.

9. The granule of claim 7 wherein the inert particle is sodium sulfate.

10. The granule of any of claims 1-9 which further comprises an additional coating layer on the inside or outside surface of the salt coating.

11. The granule of claim 10 wherein the additional coating layer comprises polyvinyl alcohol (PVA).

12. The granule of claim 10 or 11 wherein the additional coating layer comprises talc.

13. The granule of any of claims 1-12 which has a particle size of 100-1000 µm

14. The granule of any of claims 1-13 wherein the phytase is the *E*. *coli* phytase disclosed in US 6110719.

15. The granule of any of claims 1-13 wherein the phytase has an amino acid sequence of at least 75% identity to the amino acid sequence of the *E*. *coli* phytase disclosed in US 6110719.

16. A steam treated pelletized feed composition comprising phytase granules according to any of claims 1-15.

17. A method for manufacturing a feed composition comprising the steps of:
a) mixing feed components with the granules of any of claims 1-15,
b) steam treating the mixture (a), and
c) pelleting the steam treated mixture (b).
